# EUROPÄISCHE PATENTSCHRIFT

(11) **EP 1 233 171 B1**
(45) Veröffentlichungstag und Bekanntmachung des Hinweises auf die Patenterteilung: **06.08.2003**
(21) Anmeldenummer: 01103353.7
(22) Anmeldetag: 13.02.2001
(51) Int. Cl.: F02M 31/10

(54) **Vorrichtung zur thermischen Behandlung von viskosen Treibstoffen für Brennkraftmaschinen**
Device for the thermal treatment of viscous fuels for internal combustion engines
Dispositif pour le traitement thermique d'un combustible visqueux pour moteur à combustion interne

(43) Veröffentlichungstag der Anmeldung: 21.08.2002
(73) Patentinhaber: Herzog, Siegfried, 21376 Salzhausen (DE); Valero, Juan, 23480 Quesada (Jaen) (ES)
(72) Erfinder: Herzog, Siegfried, 21376 Salzhausen (DE); Valero, Juan, 23480 Quesada (Jaen) (ES)
(74) Vertreter: Glawe, Delfs, Moll & Partner

(56) Entgegenhaltungen:
- EP-A- 0 271 671
- WO-A-98/38420
- DE-A- 19 635 220
- DE-A- 19 942 824
- US-A- 4 180 036
- US-A- 4 700 047
- US-A- 4 841 943

## Beschreibung

Die Erfindung betrifft eine Vorrichtung zum Behandlung von viskosen Treibstoffen für mit einer Kühlflüssigkeit gekühlte Verbrennungsmotoren von mit einer Batterie versehenen Fahrzeugen, die einen in der Treibstoffzuleitung zum Motor anbringbaren Hohlraum aufweist, der vom Treibstoff durchströmt werden kann, der über eine Wärmetauscherfläche thermisch mit dem Kühlflüssigkeitskreislauf verbindbar ist und in dem eine elektrische Heizeinrichtung angeordnet ist.

Viskose Treibstoffe können für normale Verbrennungsmotoren, die z. B. mit Dieselöl arbeiten, nicht ohne weiteres verwendet werden. Aufgrund ihrer hohen Viskosität ist es nicht möglich, die Treibstoffe in genügender Menge den Zylindern zuzuführen und dort genügend fein zu verteilen, z. B. durch eine Einspritzdüse. Aus diesem Grunde können viele Treibstoffe, die an sich geeignet erscheinen würden, für den Betrieb von Verbrennungsmotoren, insbesondere für den Antrieb von Kraftfahrzeugen nicht verwendet werden.

Dies ist ein großer Nachteil, obwohl die Verwendung von Pflanzenöl große Vorteile hat. Ein Land, das genügend Pflanzenöl herstellen kann, würde durch die Verwendung von Pflanzenöl als Treibstoff für Verbrennungsmotoren von Lieferbeschränkungen und Preiserhöhungen der erdölfördernden Staaten unabhängig. In vielen Fällen wird das Pflanzenöl billiger sein als die entsprechenden Mineralöle. Auch nach Erschöpfung der Erdölvorräte wird Pflanzenöl immer noch zur Verfügung stehen. Ein ganz besonderer Vorteil besteht natürlich dadrin, daß die Verbrennung von Pflanzenöl die Belastung der Atmosphäre mit dem Treibhausgas Kohlendioxid nicht erhöht, da es sich beim Pflanzenöl um eine erneuerbare, nachwachsende Energiequelle handelt. Außerdem hat Plfanzenöl wegen seines Sauerstoffsgehalts besondere Vorteile bei der Verbrennung. Pflanzenöl kann aber wegen seiner hohen Viskosität für Verbrennungsmotoren nicht verwendet werden.

Bei einer Vorrichtung der eingangs genannten Art (US 4,180,036 A) sollten Schwierigkeiten beim Starten bei extremer Kälte vermieden werden. Zu diesem Zweck muß ein elektrisches Kabel in eine "external source of electrical power" eingesteckt werden, also offenbar eine Netzsteckdose. Das Fahrzeug muß dann solange an der Netzsteckdose angeschlossen bleiben, bis der Kraftstoff genügend warm ist.

Die Aufgabe der Erfindung besteht demgegenüber in der Schaffung einer Vorrichtung der eingangs genannten Art, mit der viskose Treibstoffe unabhängig von externen Stromquellen ohne komplizierte Betätigungen so behandelt werden können, daß sie für den Antrieb von Verbrennungsmotoren für Kraftfahrzeuge geeignet sind.

Die erfindungsgemäße Lösung besteht darin, daß die Vorrichtung insbesondere für Pflanzenöl ausgebildet ist, daß die elektrische Heizeinrichtung von der Fahrzeugbatterie speisbar und thermostat- oder zeitgesteuert ist, und daß die Vorrichtung automatisch betreibbar ist.

Durch die erfindungsgemäße Vorrichtung soll der Treibstoff, bevor er dem Verbrennungsmotor zugeführt wird, erwärmt werden, was seine Viskosität so weit herabsetzt, daß er;ohne Probleme in handelsüblichen Verbrennungsmotoren, insbesondere Dieselmotoren verwendet werden kann. Der Treibstoff wird dabei über die Wärmetauscherfläche vom Kühlflüssigkeitskreislauf erwärmt. Die Temperatur der Kühlflüssigkeit beträgt im betriebswarmen Zustand ungefähr 70° bis 90°C, was eine optimale Erwärmung für das Pflanzenöl bedeutet.

Während auf diese Weise der einwandfreie Betrieb des Verbrennungsmotors gesichert ist, wenn die Kühlflüssigkeit ihre Temperatur von 70° bis 90° C erreicht hat, so ist dies beim Start des kalten Fahrzeuges selbstverständlich nicht der Fall. Um hier auch bei kaltem Fahrzeug und Motor die nötige Erwärmung des Pflanzenöls zu ermöglichen, ist in dem Hohlraum eine elektrische Heizeinrichtung angeordnet. Bevor der Motor in Betrieb gesetzt wird, wird mit dieser Heizeinrichtung das Pflanzenöl im Hohlraum auf die erforderliche Temperatur gebracht.

Die Vorrichtung hat den Vorteil, daß sie kostengünstig und einfach in die Treibstoffzuleitung eines Verbrennungsmotors eingebaut werden kann. Sie weist keine beweglichen Teile und keine teuren Einzelteile auf. Eine besonders günstige, einfache, aber doch zuverlässige Ausführungsform zeichnet sich dadurch aus, daß die Heizeinrichtung eine Glühkerze ist. Solche Glühkerzen sind für Dieselmotoren handelsüblich erhältlich, die vorgeglüht werden müssen.

Zweckmäßigerweise ist die Wärmetauscherfläche eine in den Hohlraum hineinreichende Rohrschlange, die von der Kühlflüssigkeit durchströmt wird.

In Fällen, bei denen sehr viel Treibstoff verbraucht wird, also bei Lastkraftwagen, kann es zweckmäßig sein, mehr als eine elektrische Heizeinrichtung vorzusehen, um eine ausreichende Menge von Treibstoff zu erwärmen.

Bei einer vorteilhaften Ausführungsform ist die Vorrichtung thermostatgesteuert. In diesem Fall kann z. B. vorgesehen sein, daß die Heizeinrichtung abgestellt wird, sobald der Treibstoff eine vorgegebene Temperatur erreicht. Aber auch die Kühlflüssigkeit kann thermostatgesteuert sein. Strömt nämlich bei noch kalter Kühlflüssigkeit zuviel Kühlflüssigkeit durch den Wärmetauscher, würde das Pflanzenöl wieder abgekühlt. Um dies zu verhindern, könnte die Thermostatsteuerung des Kühlsystems des Verbrennungsmotors verwendet werden, die ja erst dann Kühlflüssigkeit durch den Kühler schickt, wenn die Kühlflüssigkeit eine gewisse Temperatur erreicht hat. Ist dann der Wärmetauscher der erfindungsgemäßen Vorrichtung parallel zum Kühler geschaltet, so würde auch erst dann Kühlflüssigkeit durch den Wärmetauscher geschickt werden. Da diese dann eine ausreichende Temperatur hat, könnte sie den Treibstoff nicht mehr abkühlen, sondern würde ihn erwärmen. Da aber bei sehr kalter Witterung erst sehr spät oder möglicherweise gar nicht Kühlflüssigkeit durch den Kühler geleitet wird, könnte der Wärmetauscher der erfindungsgemäßen Vorrichtung auch mit dem Motorkühlkreislauf verbunden sein. In diesem Falle könnte man dann den Zufluß zum Wärmetauscher ebenfalls durch einen Thermostat steuern und erst dann Kühlflüssigkeit durch den Wärmetauscher strömen lassen, wenn die Kühlflüssigkeit die notwendige Temperatur erreicht hat.

Zusätzlich zu dieser Thermostatsteuerung oder auch ohne eine solche Thermostatsteuerung kann vorgesehen sein, daß die elektrische Heizeinrichtung zeitgesteuert ist. Man könnte z. B. vorsehen, daß der im Hohlraum befindliche Treibstoff während 30 s geheizt wird, wobei anschließend die elektrische Heiz-einrichtung abgeschaltet wird.

Hiermit kombiniert oder unabhängig von dieser Zeitsteuerung kann die Vorrichtung mit einer Anlaßverzögerung verbunden sein. Das heißt, daß der Vorgang des Anlaßens des Motors erst möglich ist oder erst automatisch erfolgt, nachdem die Heizeinrichtung eine ausreichende Zeit den Treibstoff erwärmt hat. Man könnte z. B. eine Automatik vorsehen, daß bei Betätigung des Anlaßschalters zunächst für eine gewisse Zeit die Heizeinrichtung betrieben wird und erst dann automatisch ohne weiteres Zutun der Betätigungsperson auch der Anlasser für den Motor in Betrieb gesetzt wird.

Solange wie die Kühlflüssigkeit noch kalt ist, kann sie selbstverständlich nicht den Treibstoff erwärmen. Man könnte daher, auch im Zusammenhang mit der oben erwähnten Zeitsteuerung oder Thermostatsteuerung die elektrische Heizeinrichtung so lange betreiben, bis die Kühlflüssigkeit die ausreichende Temperatur erreicht hat. Da aber die Kühlflüssigkeit spätestens nach einer Fahrstrecke von ungefähr 5 bis 10 km die ausreichende Temperatur erreicht hat, ist es lediglich erforderlich, den Hohlraum so groß zu bemessen, daß sein Volumen dem Treibstoffverbrauch einer Fahrstrecke von ungefähr 5 bis 10 km entspricht. In diesem Falle steht nach einmaligem Erwärmen durch die elektrische Heizeinrichtung ausreichend erwärmter Heizstoff zur Verfügung, bis die Heizwirkung der Kühlflüssigkeit einsetzt.

Zweckmäßigerweise ist dieser Hohlraum wärmeisoliert, damit er bei tiefen Außentemperaturen keine Wärme nach außen abgibt.

Die Erfindung wird im folgenden anhand von vorteilhaften Ausführungsformen unter Bezugnahme auf die beigefügten Zeichnungen beschrieben. Es zeigen in schematischer Ansicht:
- Fig. 1: eine erste Ausführungsform der Erfindung;
- Fig. 2: eine zweite Ausführungsform der Erfindung; und
- Fig. 3: eine besondere Schaltungsanordnung für die erfindungsgemäße Vorrichtung.

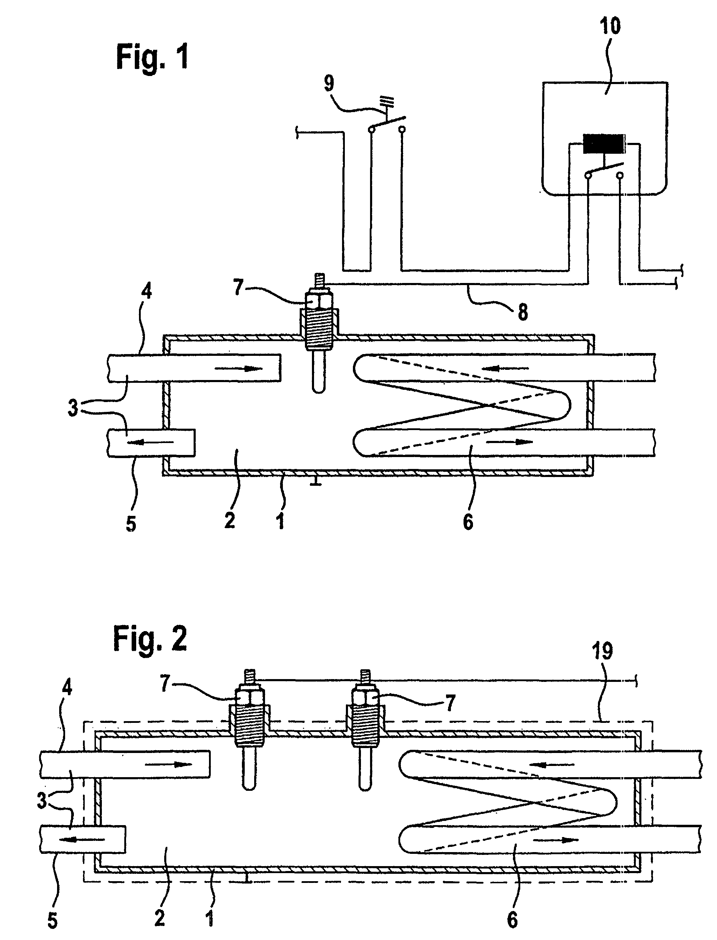

Wie dies in Fig. 1 gezeigt ist, weist die erfindungsgemäße Vorrichtung einen Behälter 1 mit einem Hohlraum 2 auf. Dieser ist in die Treibstoffleitung 3 eingesetzt. Der Treibstoff strömt durch die Leitung 4 in den Behälter und verläßt diese durch die Leitung 5. Im Hohlraum 2 ist weiter eine Rohrschlange 6 angeordnet, die von der Kühlflüssigkeit eines nicht gezeigten Verbrennungsmotors durchströmt ist. Bei 7 ist eine Glühkerze gezeigt, die über die Leitung 8 mit Strom von der nicht gezeigten Batterie versorgt wird.

Bei den in den Zeichnungen gezeigten Ausführungsformen befindet sich die Heizeinrichtung in Form der Glühkerze 7 oben, und auch der Treibstoff strömt oben in den Hohlraum 2 hinein. Zumindestens genauso zweckmäßig ist es aber, wenn die Glühkerze 7 unten angeordnet ist und der Treibstoff unten zuströmt, da so der warme Treibstoff nach oben strömt und zum Motor geleitet wird. In Folge des warmen nach oben strömenden Treibstoffs wird dieser auch besser im Hohlraum 2 durchmischt.

Die Ausführungsform der Fig. 2 zeigt einen größeren Hohlraum 2, wie er z. B. für Lastkraftwagen Verwendung finden würde. Um die größere Kraftstoffmenge in vernünftiger Zeit aufheizen zu können, sind zwei Glühkerzen 7 verwendet.

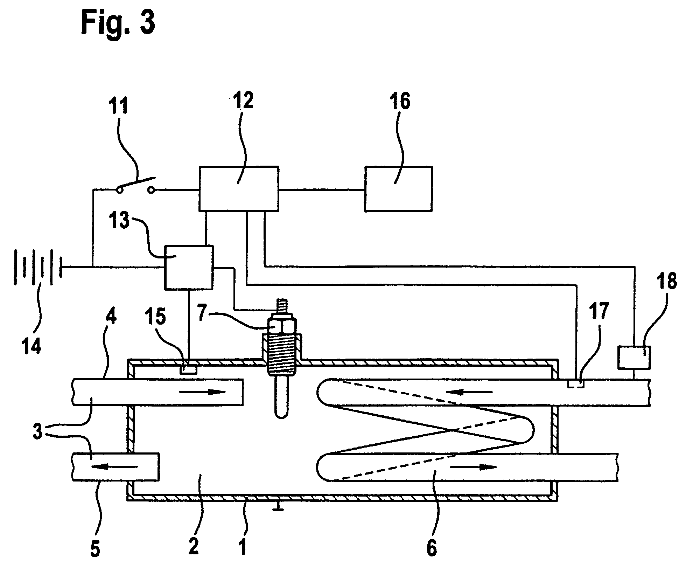

Die Ausführungsform der Fig. 3 unterscheidet sich von derjenigen der Fig. 1 durch die andere Art der Ansteuerung. Der Betrieb des Verbrennungsmotors wird durch einen Tasterschalter 11 eingeleitet, dessen Schaltsignal an eine zentrale Steuereinheit 12 gegeben wird, die dann sofort über eine Schalteinheit 13 die Glühkerze 7 mit Strom von der Batterie 14 versorgt. Nachdem eine gewünschte Temperatur des Treibstoffs im Hohlraum 2 durch einen Thermofühler 15 festgestellt ist, schaltet die Schalteinheit 13 den Strom zur Glühkerze 7 ab. Sofort danach oder nach einem vorgegebenen Zeitinterval, nachdem der Taster 11 betätigt worden ist, betätigt die zentrale Steuereinheit 12 den Anlasser des Motors, der bei 1 angedeutet ist.

Die Temperatur des zuströmenden Kühlwassers wird durch einen Thermofühler 17 überwacht. Solange diese Temperatur nicht einen gewissen vorgegebenen Wert erreicht hat, bleibt ein Ventil 18 geschlossen. Der Thermofühler 17 und das Ventil 18 sind ebenfalls mit der zentralen Steuereinheit 12 verbunden.

Damit bei tiefen Außentemperaturen der Treibstoff nicht zu schnell abkühlt, ist bei einer vorteilhaften Ausführungsform die Vorrichtung mit einer Wärmeisolierung versehen, die in Fig. 2 bei 19 angedeutet ist.

## Patentansprüche

1. Vorrichtung zum Behandeln von viskosen Treibstoffen für mit einer Kühlflüssigkeit gekühlte Verbrennungsmotoren von mit einer Batterie versehenen Fahrzeugen, die einen in der Treibstoffzuleitung (3, 4, 5) zum Motor anbringbaren Hohlraum (2) aufweist, der vom Treibstoff durchströmt werden kann, der über eine Wärmetauscherfläche (6) thermisch mit dem Kühlflüssigkeitkreislauf verbindbar ist und in dem eine elektrische Heizeinrichtung (7) angeordnet ist, **dadurch gekennzeichnet, daß** sie insbesondere für Pflanzenöl ausgebildet ist, daß die elektrische Heizeinrichtung (7) von der Fahrzeugbatterie (14) speisbar und thermostat- oder zeitgesteuert ist. und daß die Vorrichtung automatisch betreibbar ist.

2. Vorrichtung nach Anspruch 1, **dadurch gekennzeichnet, daß** sie mit einer Anlaßverzögerung (12) verbunden ist.

3. Vorrichtung nach Anspruch 1 oder 2, **dadurch gekennzeichnet, daß** die elektrische Heizeinrichtung eine Glühkerze (7) ist.

4. Vorrichtung nach einem der Ansprüche 1 bis 3, **dadurch gekennzeichnet, daß** die Wärmetauscherfläche eine in den Hohlraum hineinreichende Rohrschlange (6) ist, die von der Kühlflüssigkeit durchströmt wird.

5. Vorrichtung nach einem der.Ansprüche 1 bis 4, **dadurch gekennzeichnet, daß** sie mehr als eine elektrische Heizeinrichtung (7) aufweist.

6. Vorrichtung nach einem der Ansprüche 1 bis 5, **dadurch gekennzeichnet, daß** auch der Zufluß von Motorkühlflüssigkeit thermostatgesteuert ist.

7. Vorrichtung nach einem der Ansprüche 1 bis 6, **dadurch gekennzeichnet, daß** der Hohlraum (2) wärmeisoliert (19) ist.

8. Vorrichtung nach einem der Ansprüche 1 bis 7 für Kraftfahrzeuge, **dadurch gekennzeichnet, daß** der Hohlraum (2) ein Volumen hat, der einen Treibstoffverbrauch einer Fahrstrecke von ungefähr 5 bis 10 km entspricht.

## Claims

1. A device for treating viscous fuels for combustion engines cooled by a cooling liquid in vehicles provided with a battery, which has a chamber (2) that can be installed in the fuel feed-pipe (3, 4, 5) to the engine, through which the fuel can flow and which can be thermally connected with the cooling liquid circulation via a heat exchanger surface (6) and in which an electrical heating device (7) is arranged, **characterized by** being formed especially for vegetable oil, by the electrical heating device (7) being able to be fed from the vehicle battery (14) and controlled by thermostat or by time, and by the device being operable automatically.

2. A device according to Claim 1, **characterized by** being connected to a start delay (12).

3. A device according to Claim 1 or 2, **characterized by** the electrical heating device being a spark plug (7).

4. A device according to one of Claims 1 to 3, **characterized by** the heat exchanger surface being a coil pipe (6) extending into the chamber, through which the cooling liquid flows.

5. A device according to one of Claims 1 to 4, **characterized by** having more than one electrical heating device (7).

6. A device according to one of Claims 1 to 5, **characterized by** the flow of engine cooling liquid also being controlled by thermostat.

7. A device according to one of Claims 1 to 6, **characterized by** the chamber (2) being heat insulated (19).

8. A device according to one of Claims 1 to 7 for vehicles, **characterized by** the chamber (2) having a volume corresponding to a fuel consumption of a journey of about 5 to 10 kilometers.

## Revendications

1. Dispositif pour le traitement de carburants visqueux pour moteurs à combustion refroidis par un liquide de refroidissement de véhicules automobiles munis d'une batterie, qui comprend un espace (2) pouvant être installé dans la conduite d'amenée du carburant (3, 4, 5) vers le monteur, dans lequel le carburant peut circuler, qui peut être relié thermiquement avec le circuit du liquide de refroidissement au moyen d'une surface d'échange de chaleur (6) et dans lequel une installation de chauffage électrique (7) est agencée, **caractérisé en ce qu'**il est conçu en particulier pour de l'huile végétale, **en ce que** l'installation de chauffage électrique (7) peut être alimentée par la batterie (14) du véhicule et est commandée par thermostat ou par temporisation, et **en ce que** le dispositif peut être utilisé automatiquement.

2. Dispositif selon la revendication 1, **caractérisé en ce qu'**il est relié à un retardateur de démarrage (12).

3. Dispositif selon l'une des revendications 1 ou 2, **caractérisé en ce que** l'installation de chauffage électrique est une bougie de réchauffage (7).

4. Dispositif selon l'une des revendications 1 à 3, **caractérisé en ce que** la surface d'échange de chaleur est un serpentin (6) qui pénètre dans l'espace, dans lequel circule le liquide de refroidissement.

5. Dispositif selon l'une des revendications 1 à 4, **caractérisé en ce qu'**il comprend plus qu'une installation de chauffage électrique (7).

6. Dispositif selon l'une des revendications 1 à 5, **caractérisé en ce que** l'arrivée du liquide de refroidissement du moteur est également commandée par thermostat.

7. Dispositif selon l'une des revendications 1 à 6, **caractérisé en ce que** l'espace (2) est isolé thermiquement (19).

8. Dispositif selon l'une des revendications 1 à 7 pour véhicules automobiles, **caractérisé en ce que** l'espace (2) possède un volume qui correspond à la consommation de carburant d'un parcours d'environ 5 à 10 km.
